(19) Europäisches Patentamt
European Patent Office
Office européen des brevets

(11) **EP 2 809 123 A1**

(12) **EUROPEAN PATENT APPLICATION**

(43) Date of publication:
**03.12.2014 Bulletin 2014/49**

(51) Int Cl.:
***H04W 72/08*** *(2009.01)*    *H04B 7/06* *(2006.01)*

(21) Application number: **13382201.5**

(22) Date of filing: **30.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Telefonica S.A.**
**28013 Madrid (ES)**

(72) Inventors:
- **Cucala García, Luis**
  **28013 Madrid (ES)**
- **Lorca Hernando, Javier**
  **28013 Madrid (ES)**

(74) Representative: **Gonzalez-Alberto Rodriguez, Natalia**
**GARRIGUES IP, S.L.P.**
**Hermosilla, 3**
**28001 Madrid (ES)**

(54) **Method and system for reducing interference in a wireless network and computer program thereof**

(57)    In the method, when at least one UE wirelessly connected to a serving base station suffers interference from an interfering base station, said UE compares the radio resources that receives from said serving base station with the same radio resources that receives from said interfering base station in order to calculate the phase difference between the radio resources and then provides the calculated phase difference, by means of a phase difference indication parameter, to the serving base station; The serving base station calculates phase coordination messages and sends them to said interfering base station; and the interfering base station generates, using said phase coordination messages, radio resources that are orthogonal in phase at said UE with the same radio resources received from the serving base station.

The system and computer program implements the method.

eNB

Coordination area

**FIG. 1**

EP 2 809 123 A1

**Description**

Field of the art

The present invention generally relates to the field of wireless communications, and more particularly to a method and a system for reducing interference in a wireless network and computer program thereof by allowing a UE to receive from its serving base station a set of radio resources that will be orthogonal in the phase domain with the same radio resources used by an interfering base station.

Background of the invention

Single frequency radio networks like Long Term Evolution or LTE and LTE-Advanced or LTE-A suffer from a loss of performance for those mobile terminals located in the border coverage area between two or more base stations, because they can receive transmissions from its intended base station and at the same time and frequency receive unwanted interference from the neighbouring base stations. The unwanted interference yields a low signal to interference plus noise ratio, limiting the data rate the mobile terminal can support. To overcome this limitation the User Equipment or UE must receive from its serving base station or eNB a set of radio resources that should be orthogonal to the radio resources emitted by other base stations at the same time and in the same frequency.

When neighbour eNB's share the same frequency band they must compete for the usage of the radio resources for providing service to mobile terminals located in the border coverage area between them. This means that when a given eNB schedules a radio resource, i.e. a set of Resource Blocks (RB), in the downlink to a particular UE, a neighbour eNB can schedule the same radio resources to another UE.

The main LTE and LTE-A physical layer procedure to manage the downlink radio resource assignment to a UE is based on the UE reporting back to the serving eNB which is the quality of the previously received radio resources. To this end, the UE measures the Signal to Noise plus Interference Ratio (SNIR) of the received downlink Reference Signals, based on instructions from the eNB. The UE can measure the average SNIR of the full downlink bandwidth, the SNIR of a set of best sub bands, or the SNIR of a set of sub bands that cover the full downlink bandwidth. For every measured SNIR the UE calculates a Channel Quality Indicator (CQI), which is an indication of the Modulation and Coding Scheme (MCS) it could support in every sub band. The UE reports back to its serving eNB the required CQI's, and the eNB can then can use this information for subsequent downlink radio resource scheduling decisions to that UE.

The UE procedures for reporting Channel State Information (CSI) to the eNB, including the CQI parameter, are described in **Error! Reference source not found.**and they consist of the channel quality indicator (CQI), a precoding matrix indicator (PMI), a precoding type indicator (PTI), and/or rank indication (RI), which are controlled by the eNB. CSI reporting is periodic or aperiodic. In the case of Frequency Selective (per sub band) CSI reporting, the periodic CSI reporting is supported by the Physical Uplink Control Channel (PUCCH), and the aperiodic CSI reporting is supported by the Physical Uplink Shared Channel (PUSCH).

In the case of aperiodic CSI Reporting using PUSCH, the UE performs aperiodic CSI reporting using the PUSCH in uplink subframe n+k, upon decoding in downlink subframe n either a Downlink Control Information (DCI) format, or a Random Access Response Grant. If the CSI request field is 1 bit, a CSI report is triggered if the CSI request field is set to '1'. If the CSI request field size is 2 bits, a CSI report is triggered according to the value in table 1.

Table 1. **CSI** Request field for PDCCH with uplink DCI format in UE specific search space.

| Value of CSI request field | Description |
|---|---|
| '00' | No aperiodic CSI report is triggered |
| '01' | Aperiodic CSI report is triggered for serving cell *C* |
| '10' | Aperiodic CSI report is triggered for a 1st of serving cells configured by higher layers |
| '11' | Aperiodic CSI report is triggered for a 2nd set of serving cells configured by higher layers |

In the case of periodic CSI Reporting using PUCCH, a UE is semi-statically configured by higher layers to periodically feedback different the CSI on the PUCCH using the reporting modes given in table 2.

| | | PMI Feedback Type | |
|---|---|---|---|
| | | No PMI | Single PMI |
| PUCCH CQI Feedback Type | Wideband (wideband CQI) | Mode 1-0 | Mode 1-1 |
| | UE Selected (subband CQI) | Mode 2-0 | Mode 2-1 |

Table 2. CQI and PMI Feedback Types for periodic PUCCH CSI reporting Modes

On the other hand, one solution proposed in LTE and LTE-A for the inter-cell interference coordination (ICIC) is the use of Almost Blank Subframe patterns (ABS). In this case, an eNB reserves some subframes in its frame for no transmission of data, in order to reduce the potential interference with other eNB's. The Almost Blank Subframe pattern is communicated to neighbouring eNB's through the X2 interface between them, and can be used by the neighbouring eNB's to decide their own Almost Blank Subframe pattern or take downlink radio resource scheduling decisions. The Almost Blank Subframe pattern Information Element exchanged through X2 is described in

**Error! Reference source not found.**

Another solution proposed in LTE-A for inter-cell interference coordination (ICIC) is the Cooperative Multi-Point transmission or CoMP. CoMP is a set of procedures under discussion in 3GPP aimed to a coordination of transmission between neighbouring eNB's. CoMP procedures are described in 3GPP TR 36.819 V11.1.0. The main scenarios envisioned by 3GPP for CoMP are:

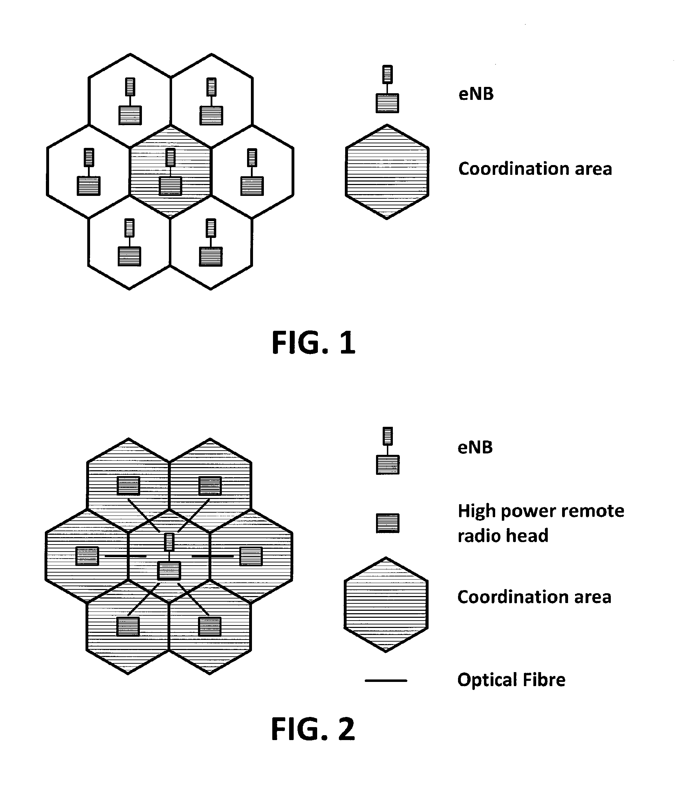

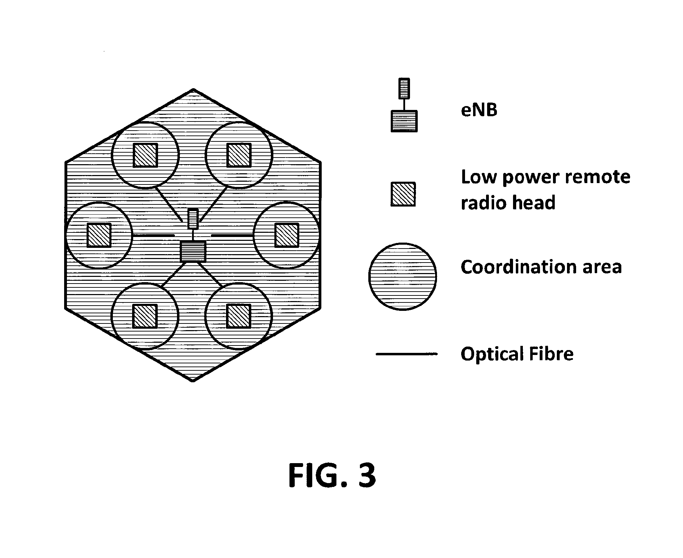

- Scenario 1: Homogeneous network with intra-site CoMP, as illustrated in Fig. 1.
- Scenario 2: Homogeneous network with high Tx power RRHs, as illustrated in Fig. 2.
- Scenario 3: Heterogeneous network with low power RRHs within the macrocell coverage where the transmission/reception points created by the RRHs have different cell IDs as the macro cell as illustrated in Fig.3.
- Scenario 4: Heterogeneous network with low power RRHs within the macrocell coverage where the transmission/reception points created by the RRHs have the same cell IDs as the macro cell as illustrated in Fig. 3.

The CoMP techniques may be categorized into one of the following categories.

• Joint Processing (JP): Data for a UE is available at more than one point in the CoMP cooperating set (the of eNB's involved in the coordination mechanism) for a time-frequency resource

    o Joint Transmission (JT): Simultaneous data transmission from multiple points (part of or entire CoMP cooperating set) to a single UE or multiple UEs in a time-frequency resource. Data to a UE is simultaneously transmitted from multiple points, to improve the received signal quality and/or data throughput
    o Dynamic point selection (DPS)/muting: Data is transmitted from one point (within the CoMP cooperating set) in a time-frequency resource. The transmitting/muting point may change from one subframe to another. Data is available simultaneously at multiple points.

• Coordinated Scheduling/Beamforming (CS/CB): Data for an UE is only available at and transmitted from one point in the CoMP cooperating set (DL data transmission is done from that point) for a time-frequency resource but user scheduling and beamforming decisions are made with coordination among points corresponding to the CoMP cooperating set. The transmitting points are chosen semi-statically.

CoMP requires downlink channel state information (CSI) feedback from the UE to the eNB's. The CSI can be explicit, reporting the channel as observed by the UE without assuming any transmission or receiver processing, or implicit, where the feedback (e.g. CQI/PMI/RI) of a transmission format is derived using hypotheses of different transmission and/or reception processing. As part of the implicit CSI feedback, coherent JT requires inter-eNB phase information, but no inter-eNB phase information is needed in the case of CS/CB or DPS. CSI is deduced by the UE from the downlink signals, making use of the eNB downlink Reference Signals (3GPP TS 36.211 V11.0.0 Section 6.10), for example Channel State Information reference signals (CSI-RS) may be used for CoMP to identify and measure the downlink channel status of multiple transmission points.

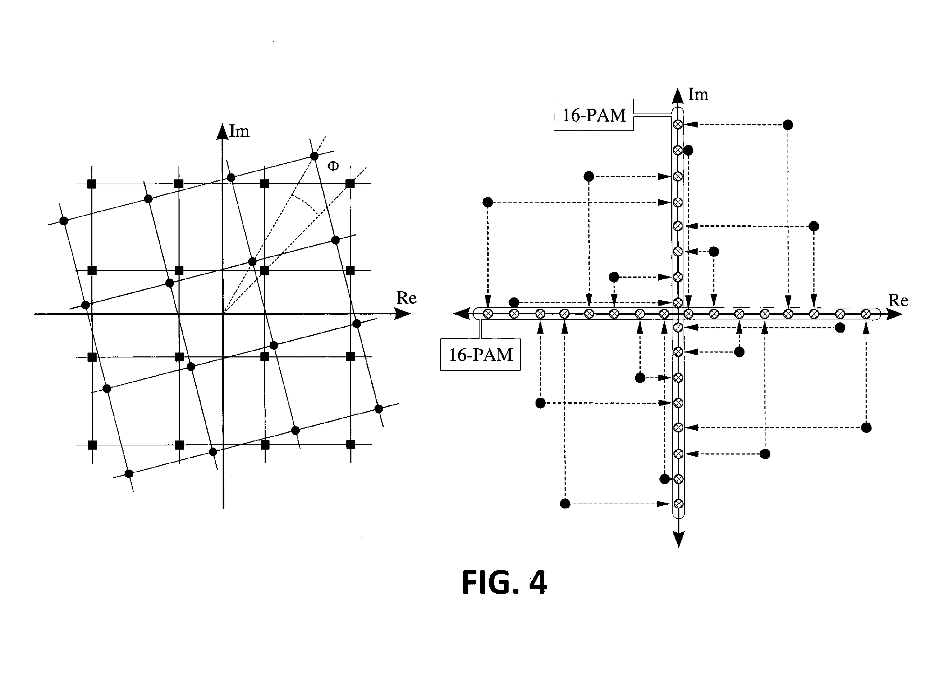

Another technique for improving the reception of radio signals is the concept of modulation diversity, which when combined with proper interleaving significantly improves the BER of an OFDM link. This diversity performance gain is established by the use of rotation of a properly chosen signal constellation, and orthogonalization of real and imaginary signal components by means of a component interleaver. Fig. 4 illustrates the concept of modulation diversity where it is considered a 16QAM constellation (left) and the rotated version (right). In a Rayleigh fading channel, by proper interleaving of the I and Q projection components, fading of the I and Q components can be made uncorrelated, and the rotated constellation exhibits order-2 diversity.

In the regular square 16QAM constellation the I and Q component carry two bit each. After rotating, however, both bits (four) are carried by both components. The information is spread over the in-phase and quadrature components. Now, proper interleaving of the I and Q components (ideally de-correlating the fading process) will accomplish order-2 diversity because each bit is effectively transmitted over two independent flat fading channels.

Constellation rotation for diversity was proposed in 3GPP **Error! Reference source not found.**although was not adopted in the current LTE standard.

Some authors have proposed signal constellation rotation and a dynamic I and Q components interleaving, based on radio channel propagation status feedback from the UE to the eNB, for example in 3GPP TS 36.211 V11.0.0 Section 7.1.

It was also proposed during the conception phase of the LTE standard to make use of a variant of the OFDM modulation that does not require a cyclic prefix to overcome inter-symbol interference (ISI) due to multi-path propagation, called OFDM/OQAM (OFDM / Offset QAM) (3GPP TS 36.211 V11.0.0 Sections 7.1 and 6.8). For this purpose, the prototype function modulating each sub-carrier must be very well localized in the time domain, to limit the inter-symbol interference. This function must also guarantee orthogonality among sub-carriers and among multi-carrier symbols. Functions having these characteristics exist, which guarantee the orthogonality only in the real domain. Consequently, the complex QAM data stream must be separated into its two real components: real part I and imaginary part Q, the imaginary part being modulated with a half-symbol-duration shifted version of the modulation filter (thus the connotation Offset).

OFDM/OQAM was proposed in 3GPP although not adopted in the current LTE standard.

On the other hand, the coherence time of the propagation channel has an impact on the performance of the OFDM-modulated LTE signal and the CSI reporting procedures. Coherence time is the time duration over which the channel impulse response is considered to be not varying due to Doppler effects. Although large OFDM symbol duration is desirable to combat time-dispersion caused ISI, however, the large OFDM symbol duration can reduce the ability to combat the fast temporal fading, specially, if the symbol period is large compared to the channel coherence time, then the channel can no longer be considered as constant through the OFDM symbol. Hence, the LTE symbol duration is kept smaller than the minimum channel coherence time. Since the channel coherence time is inversely proportional to the maximum Doppler shift $f_d$, the symbol duration $T_s$ is chosen such that:

$$T_s << \frac{1}{f_d}$$

The Doppler shift $f_d$ is calculated as follows

$$f_d = \Delta v \, . \, (f_0/c)$$

where $\Delta v$ is the relative speed of the receiver with respect to the transmitter, $f_0$ is the central frequency of the transmitter and c the speed of light.

Coherence time also affect the CSI reporting process, and the scheduling and adaptive Modulation and Coding Scheme (MCS) procedures. The UE reports to the eNB the radio channel status in a given time, and then the eNB schedules radio resources to be provided to that UE a given time later, when the channel conditions may have changed. As a general rule, it is estimated that the channel is coherent in time during $T_c$

$$T_c = 9/(16\pi \, f_d)$$

Coherence time is important for the estimation of phase of the received OFDM signal. When a radio signal is transmitted it suffers multi-path propagation between the transmitter and the receiver. The receiver will receive multiple copies of the same signal, with different relative amplitudes and delays. In a very simplified example the receiver can receive a signal (sin (wt)) and a delayed version of it (sin(wt+$\alpha$)), and the resulting detected signal will be the addition of both

$$\text{Received signal} = \sin(wt) + \sin(wt+\alpha) = 2\cos(\alpha/2)\sin(wt+\alpha/2)$$

The first term, 2 cos ($\alpha$/2), is the amplitude of the resulting signal, and the term sin (wt+$\alpha$/2) indicates that the phase of the resulting signal is $\alpha$/2. In the case of a static scenario, where there is no change of the multipath propagation and therefore no Doppler shift, the term $\alpha$/2 is constant with time. But in the case of a moving scenario, due to a movement of the transmitter, the receiver or the objects that scatter the signals along the propagation path, there will be a Doppler shift and the relative phase $\alpha$ of the different propagation paths will change with time. Therefore, the phase of the received signal $\alpha$/2 will vary with time.

The phase variation of the received signal makes it necessary for the receiver to continuously synchronize in phase with the transmitter, making use of the synchronization signals defined in LTE, because otherwise the received complex symbols modulated in every subcarrier would randomly rotate their phase with time.

Regarding the procedure to generate the LTE OFDM signal, it is described in 3GPP TS 36.211 V11.0.0 Section 6.3. It includes, among other functionalities, a modulation mapper which in LTE generates de complex symbols (BPSK, QPSK, 16QAM, 64QAM), a resource element mapper which in LTE assigns the complex symbols to radio resource elements, and an OFDM signal generation.

LTE modulation mapper is described in **Error! Reference source not found.**for BPSK, QPSK, 160AM, 64QAM, where the result of the modulation mapping is always a complex symbol with values in the I and Q axis.

LTE also makes use of the Physical downlink control channel (PDCCH) (3GPP TS 36.211 V11.0.0 Physical channels and modulation. Section 6.8). The physical downlink control channel carries scheduling assignments and other control information in the form of Downlink Control Information (DCI) **Error! Reference source not found.,** which transports downlink or uplink scheduling information. There are 13 DCI formats, from which the following can be used for downlink resources scheduling: Format 0, Format 1, Format 1 A, Format 1 B, Format 1C, Format 1 D, Format 2, Format 2A, Format 2B, Format 2C.

LTE also makes use of a standard communication interface between eNB's, the X2 interface. 3GPP **Error! Reference source not found.** specifies the radio network layer signalling procedures of the control plane between eNBs in E-UTRAN.

In LTE, the radio resources are organized in Resource Blocks, as it is specified in 3GPP TS 36.211 V11.0.0, Section 6.2.3. Resource blocks are used to describe the mapping of certain physical channels to resource elements. A physical resource block is defined as $N_{\text{symb}}^{\text{DL}}$ consecutive OFDM symbols in the time domain and $N_{\text{sc}}^{\text{RB}}$ consecutive subcarriers in the frequency domain, where $N_{\text{symb}}^{\text{DL}}$ and $N_{\text{sc}}^{\text{RB}}$ are given in the next table. A physical resource block thus consists of $N_{\text{symb}}^{\text{DL}} \times N_{\text{sc}}^{\text{RB}}$ resource elements, corresponding to one slot in the time domain and 180 kHz in the frequency domain. Physical resource blocks are numbered from 0 to $N_{\text{RB}}^{\text{DL}} - 1$ in the frequency domain. The relation between the physical resource block number $n$PRB in the frequency domain and resource elements (*k,l*) in a slot is given by

$$n_{\text{PRB}} = \left\lfloor \frac{k}{N_{\text{sc}}^{\text{RB}}} \right\rfloor$$

Table 3. Physical resource blocks parameters

| Configuration | | $N_{\text{sc}}^{\text{RB}}$ | $N_{\text{symb}}^{\text{DL}}$ |
|---|---|---|---|
| Normal cyclic prefix | $\Delta f$ = 15 kHz | 12 | 7 |
| Extended cyclic prefix | $\Delta f$ = 15 kHz | | 6 |
| | $\Delta f$ = 7.5 kHz | 24 | 3 |

On the other hand, the LTE eNB's can be synchronized in time and phase, making use of synchronization standards like IEEE 1588v2 or technologies like GPS. Time and phase synchronization between eNB's allows the coordination of radio resources between them.

In an LTE or LTE-A network it is useful to schedule radio resources to the served UE's that will not collide in frequency and time with the radio resources of neighbouring eNB's, in particular for UE's in the border area between neighbouring eNB's.

The radio resource assignment solution based on the Channel Quality Indication does not ensure that the radio resources scheduled by one eNB will not collide with the radio resources scheduled by another eNB, because scheduling decisions based on CSI rely on channel status information before the actual scheduling is performed, and if the eNB's are uncoordinated they can decide to schedule resources in the same time and frequency.

CoMP techniques try to overcome this limitation, by means of a coordination of the transmissions of different eNB's.

When Joint Processing CoMP is used, the transmitted data must be available in the different eNB's at the same time, which increases the load of the eNB's backhaul. In the particular case of Joint Transmission (JT), it is required a high data rate communication link between eNB's, typically fibre links, to support the exchange of phase information for every resource element transmitted by the eNB's, in order to ensure they will arrive coherently to the UE. And in the particular case of Dynamic Point Selection (DPS), although no phase information exchange is needed, the data rate of the communication link between eNB's will be also high because it will be necessary to decide which will be the transmitting eNB for every resource to be sent to the UE.

When Coordinated Scheduling/Beamforming CoMP is used, the transmitted data will be available in one single eNB but it will be necessary a coordination between eNB's in order to make scheduling decisions that avoid using the same radio resources by different eNB's. Coordinated Scheduling/Beamforming requires a high data rate communication link between eNB's, typically fibre links, to support the coordination process between them. Another drawback of the Coordinated Scheduling is that a given radio resource, in time and frequency, can only be used by one of the base station in order to avoid overlapping and interference with other base stations.

On the other hand, the Almost Blank Subframe patterns solution provides a way to reduce interference to UE's in the border coverage area, but it has the following limitations:

- In the particular case that the eNodeB is an HeNodeB (HeNB), the 3GPP LTE-A standard does not support an X2 interface between an HeNB and an eNB. In this way, the HeNB cannot generate an Almost Blank Subframe pattern, or cannot report to a neighbour eNB its radio Resource Block expected assignment in order to allow them to generate an Almost Blank Subframe pattern, which would reduce the interference on a mobile terminal located in the border coverage of the HeNB and an eNB.
- The Almost Blank Subframe pattern emitted by an eNodeB is basically static, in the sense that the subframes that are left almost blank are repeated in every frame. This makes an inefficient use of the radio spectrum, because some radio resources that are left blank by an eNB could be used by that eNB if the neighbouring base stations do not make use of them.
- The Almost Blank Subframe procedure reports those subframes that are almost blank so other base stations will avoid using them, and it will not be possible that two neighbouring base stations use the same subframe without experiencing some interference between them.
- The Almost Blank Subframe procedure can only report those subframes that are almost blank in the time domain, but cannot report if some radio resources in the frequency domain could be used by neighbouring eNB's.

Summary of the Invention

The invention relates to a reduction interference mechanism by which a UE receives from its serving base station a set of radio resources that will be orthogonal in the phase domain with the same radio resources used by an interfering base station.

Preferably, the proposed mechanism is implemented on the LTE-A radio interface and network.

To that end, according to a first aspect there is provided a method for reducing interference in a wireless network, wherein at least one user device or UE wirelessly connected to at least one serving base station suffers interference from at least one interfering base station. The method in a characteristic manner and on contrary of the known proposals comprises the following steps:

- comparing, said at least one UE, radio resources that receives from said at least one serving base station with the same radio resources that receives from said at least one interfering base station in order to calculate the phase difference between the radio resources;
- providing, said at least one UE, to said at least one serving base station said calculated phase difference by means of a phase difference indication parameter;

- calculating said at least one serving base station phase coordination messages and sending them to said at least one interfering base station; and
- generating, said at least one interfering base station, using said phase coordination messages, radio resources that are orthogonal in phase at said at least one UE with the same radio resources received from the at least one serving base station.

Preferably, the serving base station and the interfering base station, previous to perform said comparing step, send to said UE, by means of a Physical Downlink Control Channel (PDCCH), the phase of the generated radio resources, wherein said PDCCH indicates the relative phase of the generated radio resources with respect to the phase of the base station other radio resources, by means of a Phase Indicator.

According to an embodiment, the serving base station generates radio resources to its served UE which are modulated only by real numbers and in a single axis, for example the I axis, of a constellation diagram such as the IQ diagram. The interfering base station generates radio resources which are modulated only by real numbers and in a single axis of the IQ diagram which is orthogonal with the serving base station, for example the Q axis.

In a preferred option, the providing and the calculating steps are periodically executed, being the periodicity of the same order of magnitude than the coherence time of the radio channel. On another hand, the calculated phase difference indication parameter can be represented by an integer indicating at least the absolute value of said phase difference or the phase change. Both low periodicity reporting and simple phase indication can ensure a low data load between the UE and its serving base station, and between the serving base station and the interfering one.

Preferably, the sending step of said phase coordination messages will be done through a standard X2 interface.

According to another embodiment, the phase coordination messages are used in order to indicate if the phase of the interfering base station radio resources has to be increased or decreased, comprising: increasing the phase of the interfering base station radio resources if said phase coordination message indicates a given amount of phase increase, or decreasing the phase of the interfering base station radio resources if said phase coordination message indicates a given amount of phase decrease. For instance, the phase coordination messages received from the serving base station can indicate to the interfering base station to increase the phase of its radio resources' if the phase difference indication parameter reported by the UE is less than 90° ($\pi/2$ radians), or can indicate to the interfering base station to decrease the phase of its radio resources' if the phase difference indication parameter reported by the UE is more than 90° ($\pi/2$ radians).

According to a second aspect there is provided a system for reducing interference in a wireless network, comprising as commonly in the field: at least one user device or UE; at least one serving base station; and at least one interfering base station, wherein said UE is wirelessly connected to said at least one serving base station and suffers interference from said at least one interfering base station. On contrary of the known proposal in the system of the second aspect:

- said at least one UE comprises means for comparing radio resources that receives from said at least one serving base station with the same radio resources that receives from said at least one interfering base station in order to calculate the phase difference between them and means for providing to said at least one serving base station said calculated phase difference by means of a phase difference indication parameter;
- said at least one serving base station comprises means for calculating and sending a phase coordination message to said at least one interfering base station; and
- said at least one interfering base station comprises means for generating by using said phase coordination message, radio resources that are orthogonal in phase at said at least one UE with the same radio resources received from the at least one serving base station.

According to a third aspect there is provided a computer program product, on a non-transitory computer-readable medium executable by a microprocessor for reducing interference in a wireless network, said computer program product comprising program code instructions configured for calculating the phase difference by means of a phase difference indication parameter between the assigned radio resources of at least one user device, received from at least one serving base station, and the same time and frequency radio resources used by at least one interfering base station.

The present invention allows reducing the interference on a UE although the same radio resources are used by its serving base station and an interfering base station. The main usage scenario is a set of low power base stations, or microcells, located under the coverage area of a high power base station or macrocell, although other possible usage scenarios could be also set.

The invention is a simple form of Cooperative Multi-point Transmission (CoMP) where data is only available at one base station, but as opposed to CS/CB it does not require coordination of scheduling decisions for every radio resource sent to the terminal, only periodic reporting of phase differences at a rate lower than the coherence time of the radio channel, and thus requiring a low data rate inter-site communication between base stations.

Particularly, the proposed method requires also an updated CSI report from the UE that includes the phase difference between the serving base station and the interfering base station, but not a complete UE-to-interfering base station radio channel status report. Moreover, it leaves the phase difference correction to the interfering (macro) station, ensuring a simple implementation in the serving (micro) stations.

Brief Description of the Drawings

The previous and other advantages and features will be more fully understood from the following detailed description of embodiments, with reference to the attached, which must be considered in an illustrative and non-limiting manner, in which:

Fig. 1 is an example illustrating the described scenario 1 for a homogeneous network with intra-site CoMP.

Fig. 2 is an example illustrating the described scenario 2 for a homogeneous network with high TX power RRHs.

Fig. 3 is an example illustrating the described scenario 3 for a heterogeneous network with inter-site CoMP.

Fig. 4 is an example of a constellation rotation for signal diversity.

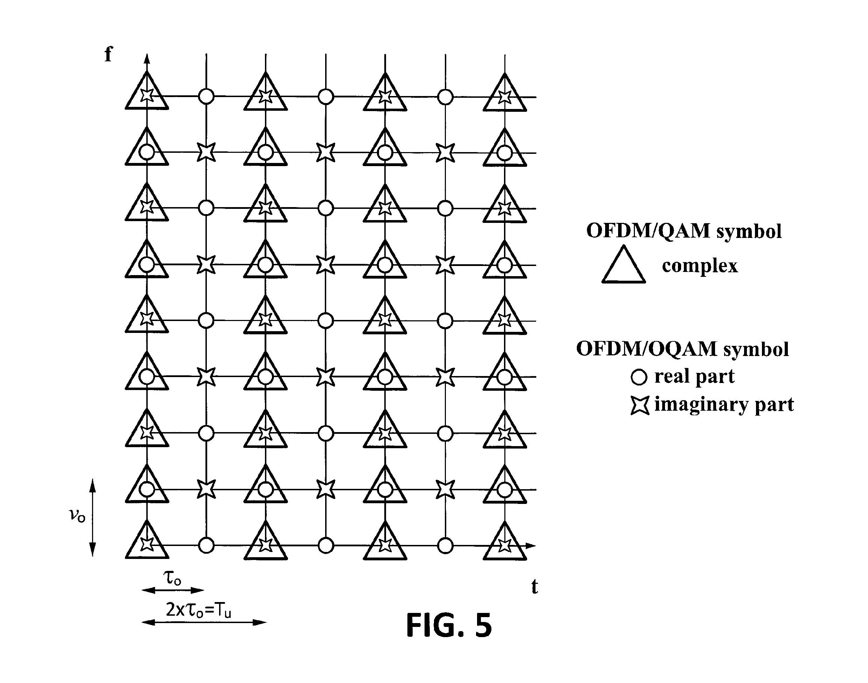

Fig. 5 is an example of an OFDM/OQAM modulation.

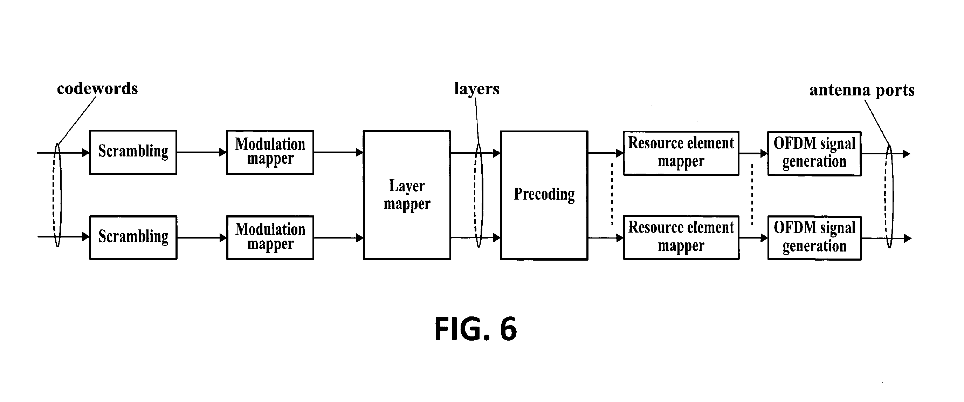

Fig. 6 is an example illustrating a LTE downlink signal generation.

Fig. 7 is an example of a typical usage scenario of the present invention.

Fig. 8 is an example on how orthogonality is achieved by the present invention in the phase domain.

Fig. 9 is an illustration of the phase calculation, UE feedback and serving base station reporting process followed by the present invention.

Fig. 10 is an example of the phase coordination algorithm for keeping PDI close to 90°, according to an embodiment of the present invention.

Fig. 11 is an example illustrating how the interfering base station adjusts the phase of its RB's that share same time and frequency with serving base stations.

Fig. 12 is an illustration of a diagram of the processes followed by the present invention according to some embodiments.

Fig. 13 is an example illustrating how the interfering base station corrects the phase of RB's making use of information from phase coordination messages

Detailed Description of Several Embodiments

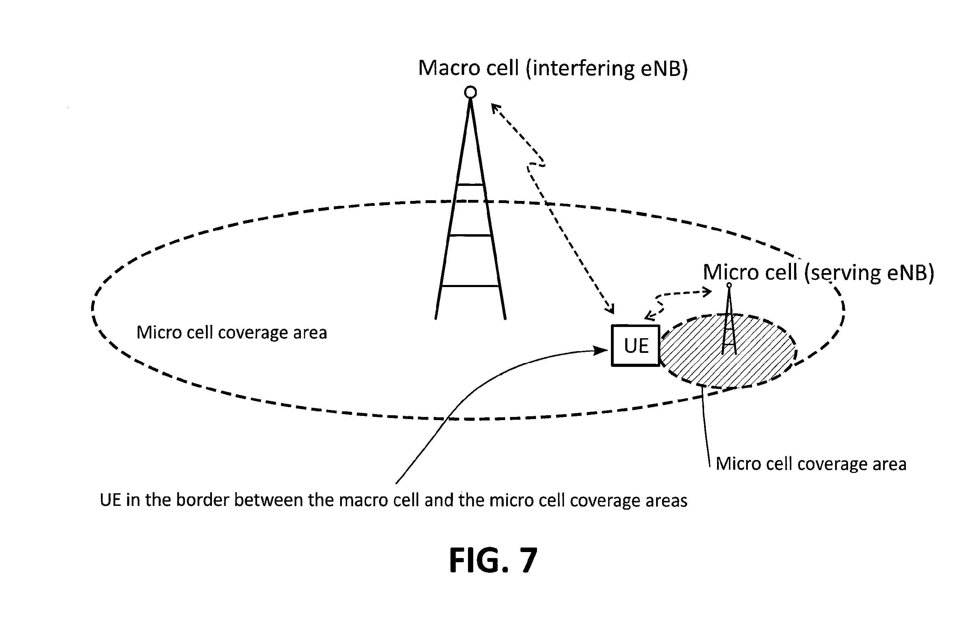

In reference to Fig. 7, it is represented a typical usage scenario of the present invention, where the serving base station or eNB is a microcell and the interfering eNB is a high power macrocell, and therefore there will be only one dominant interfering eNB. An UE located in the border coverage area between the serving eNB and the interfering eNB can receive signals from both eNB's. The information about the interfering eNB identity will be provided to the UE by its serving eNB by means of the broadcast channel (BCH) and its implementation is not part of this invention.

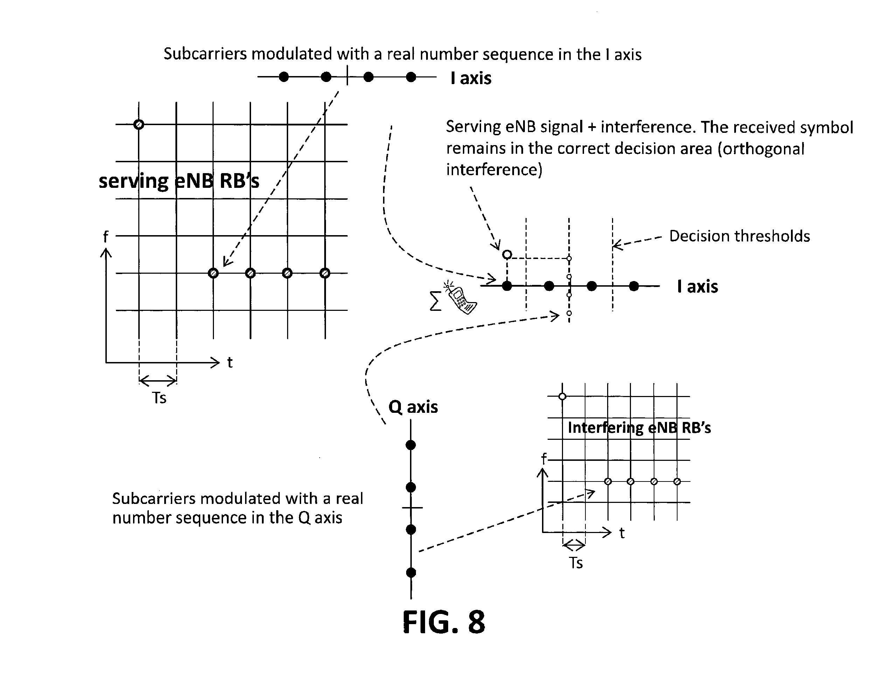

As explained before, the invention provides means to generate orthogonal Resource Blocks (RB's) in the interfering eNB with respect to the same RB's in the serving eNB. In a characteristic manner orthogonality is achieved in the phase domain, and therefore both the serving eNB and the interfering eNB can use the same RB's in the time and frequency domain, increasing the overall capacity of the radio network. This is schematically described in Fig. 8.

In reference to Fig. 8, it is showed how the serving eNB can generate downlink radio resources to its served UE which are modulated only by real numbers and in a single axis, i.e. the I axis of the constellation diagram, in this particular case an IQ diagram. The interfering eNB can also generate radio resources which are modulated only by real numbers and in a single axis of the IQ diagram which is orthogonal with the serving base station, for example the Q axis.

These downlink radio resources can be transported in the PDSCH or in the so called New Carrier Type (NCT) as it is under study in 3GPP for its release 12. This invention does not preclude any LTE physical channel for supporting these radio resources. The data to be sent in the downlink to the UE by means of these radio resources will be provided by a standard LTE DL-SCH transport channel, which will be labeled as Orthogonal DL-SCH (ODL-SCH) transport channel for identification purposes. The ODL-SCH will be mapped to LTE OFDM radio resources following the next procedures:

- The LTE modulation mapper will generate only real valued symbols. This invention does not preclude any procedure to generate these real valued symbols. Some embodiments of this mapping will be further described although they are based on existing state of the art and are not part of this invention.
- The LTE resource element mapper will map the real valued symbols to resource elements in the PDSCH or in the NCT. A set of resource elements in the PDSCH or in the NCT are reserved for transporting the ODL-SCH, and any other type of transport channel will not use them.

- The OFDM signal generator will modulate the real valued symbols in one of the axis of the I/Q diagram, either in the I axis or in the Q axis. The I axis will be that with a phase difference of 0° degrees with respect to the phase reference of the LTE signal. The Q axis will be that with a phase difference of 90° degrees with respect to the phase reference of the LTE signal. The phase reference of the LTE signal is determined by the primary and secondary synchronization signals, and the UE can make use of the LTE reference signals to improve the phase estimation for every radio resource block.

As a result of this mapping, the ODL-SCH data is modulated in a set of resource element reserved for ODL-SCH transportation, by means of real valued symbols and along a single axis of the I/Q diagram.

The serving eNB and the interfering eNB are time and phase synchronized at the LTE symbol level. The process of synchronization is not part of this invention, and can be done by means of any standard procedures, for example IEEE 1588v2.

The PDCCH will report to the UE which resource elements in the PDSCH or in the NCT are used to map an ODL-SCH and scheduled to that UE, and which is the phase of the modulated symbols with respect to the phase reference of the LTE signal. For this purpose, the Downlink Control Information (DCI) transported by the PDCCH includes a new indicator, called "Phase Indicator", which will indicate if the scheduled resource elements for transporting the ODL-SCH are modulated with a phase difference with respect to the phase of the LTE signal.

In general, the serving eNB's will keep a phase of 0° of its modulated symbols with respect to the phase reference of the LTE signal, and thus the "Phase Indicator" will be 0°, and it will be the interfering eNB who will modulate its ODL-SCH supporting symbols with some phase differences with respect to the phase reference of its LTE signal, and thus its "Phase Indicators" will be different to 0°.

The UE receives de PDCCH and the DCI information that it transports. The UE then makes use of the Phase Indicator in the modified DCI to determine if there are ODL-SCH resources scheduled to it in the PDSCH and their phase with respect to the LTE signal phase reference, in order to perform the correct demodulation of them.

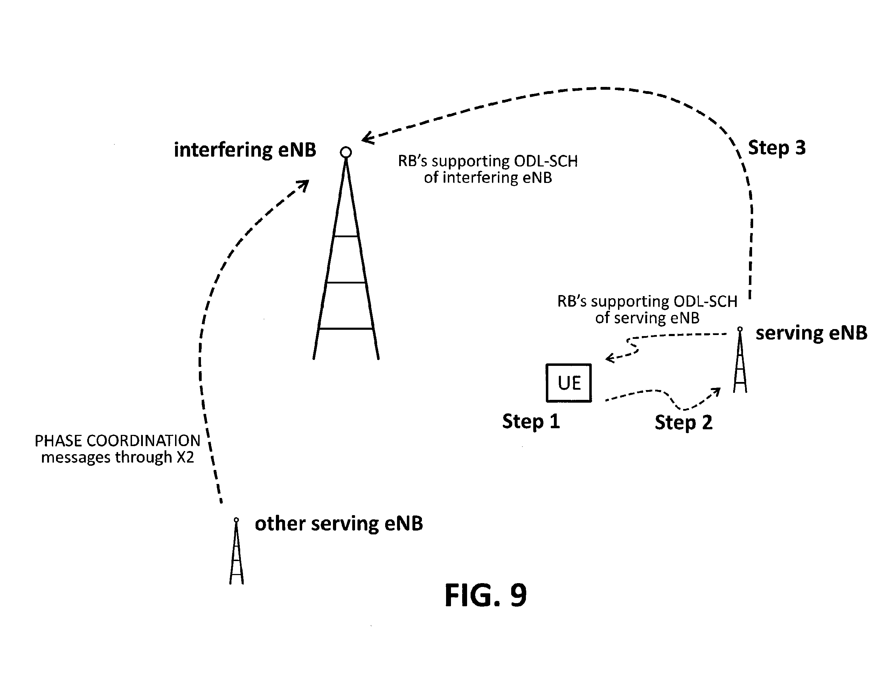

In reference to Fig. 9, step 1, the UE calculates the phase difference between the received LTE signal from its serving eNB and the interfering LTE signal from an interfering eNB. For the determination of the phase difference between the serving eNB and the interfering eNB, the UE compares the phase difference between its scheduled radio resources for transporting the ODL-SCH and the same radio resources used by an interfering base station, making use of reference signals that are located in the spectral zone of the resource elements dedicated for transporting the ODL-SCH, in order to overcome non-frequency-flat propagation conditions. This invention does not preclude any inter-eNB phase difference estimation procedure, as they are already foreseen for coherent JT CoMP, and they are not part of this invention.

Once the UE determines the phase difference between the serving eNB and the interfering eNB, step 2, it will provide a CSI feedback report to its serving eNB which includes the phase difference, by a means of Phase Difference Indicator (PDI) parameter.

The serving eNB will receive the PDI parameter from the UE and will report to the interfering eNB the phase correction it must perform, step 3. As a preferred realization of the present invention, the goal of the phase correction process is to receive from the UE Phase Difference Indicator parameters as close as possible to 90° ($\pi$/2 radians). The reporting between the serving eNB and the interfering eNB preferably will be done through the standard X2 interface, by means of phase coordination messages.

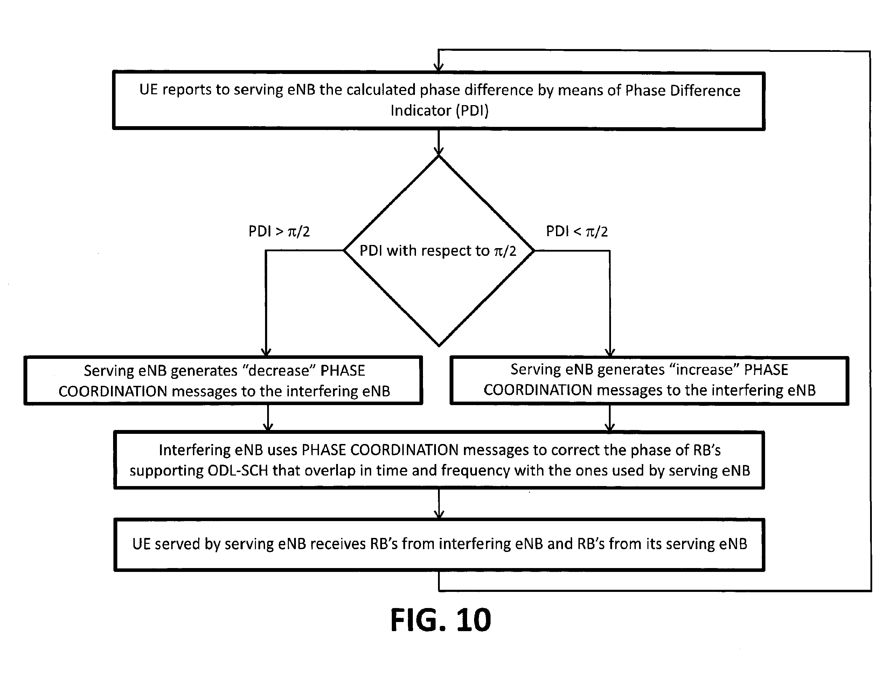

The interfering base station continuously adjusts the phase of the RB's that it uses for transporting the ODL-SCH accordingly to the phase corrections indicated by the serving base station, in order to overcome time dependent phase variations due to multi-path propagation. Phase adjustment in the interfering eNB is done by means of the phase coordination messages received from the serving eNB. For instance, the phase coordination messages received from the serving eNB will indicate to the interfering eNB to increase the phase of its RB's if the PDI reported by the UE is less than 90° ($\pi$/2 radians), or will indicate to the interfering eNB to decrease the phase of its RB's if the PDI reported by the UE is more than 90° ($\pi$/2 radians), as it is represented in the Fig. 10.

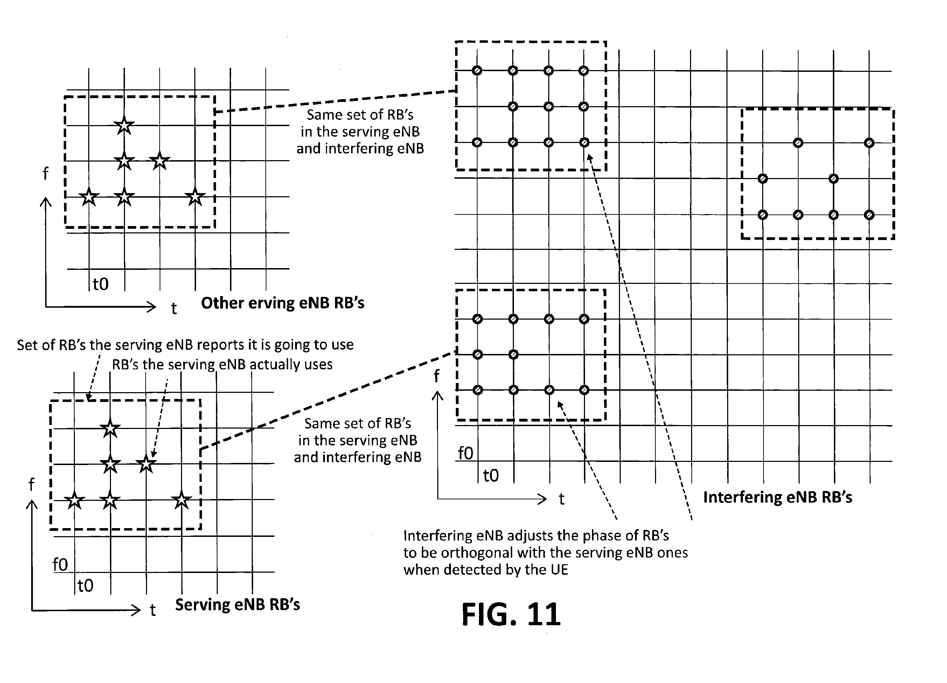

Alternatively, the interfering eNB can also receive phase coordination messages from other serving eNB's under its coverage area, and adjust its common RB's phase accordingly. The result of these phase adjustments is to ensure the RB's received in the UE from its serving eNB and the interfering eNB are orthogonal in phase. This is schematically represented in Fig.11.

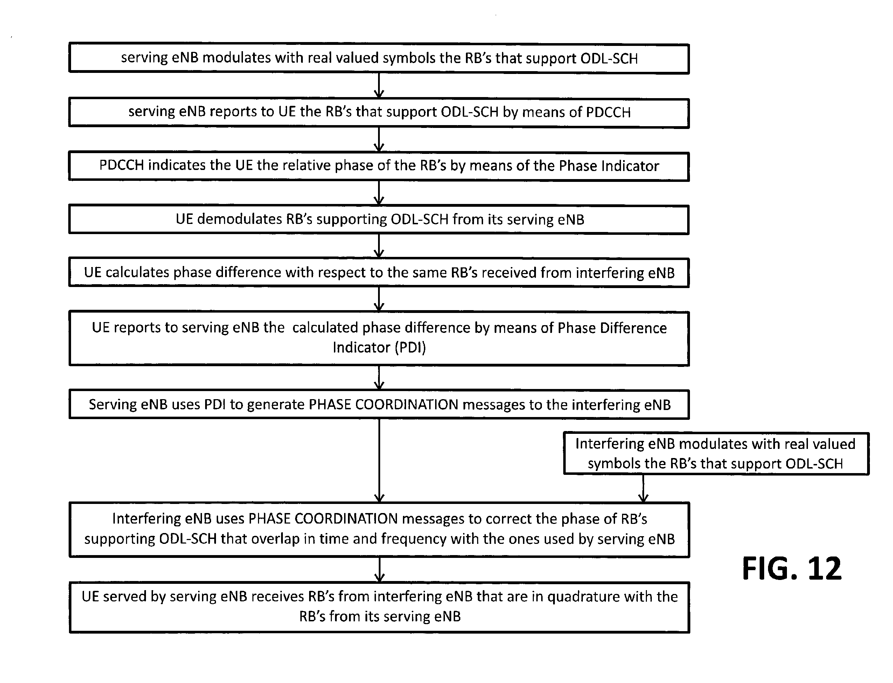

Fig. 12 illustrates in a flow diagram the described processes followed by the present invention.

In an embodiment of the present invention, the UE measures the relative phase, between the serving eNB and the interfering eNB, of RB's reserved in the PDSCH or in the NCT for transporting the ODL-SCH. The relative phase values measured by the UE for the RB's reserved for transporting the ODL-SCH can range from a maximum possible value (MaxValue) of 360° to a minimum possible value (MinValue) of 0°.

Then, the relative phase values are encoded in a set of predefined levels, in order to reduce the amount of data fed back to the serving eNB. The result of this encoding is the PDI. This invention does not preclude any procedure to assign the relative phase values to predefined levels.

In another embodiment of the present invention, the predefined levels and their corresponding PDI's are uniformly set from 0 to n, being PDI 0 assigned to the lowest possible range of relative phase, and n to the highest possible range of relative phase. The range of relative phase values ($\Delta$) for every PDI level is

$$\Delta \text{ (dB)} = (\text{MaxValue} - \text{MinValue})/n$$

Table 4. PDI index encoding

| PDI Index | Relative phase (°) |
|---|---|
| 0 | MinValue to (MinValue + $\Delta$) |
| 1 | (MinValue + $\Delta$) to (MinValue + 2$\Delta$) |
|  | ... |
|  | ... |
| n | (MaxValue - $\Delta$) to MaxValue |

In another embodiment of the present invention, the predefined levels and their corresponding PDI's are non-uniformly set, in the sense that some PDI index values will correspond to a higher range of relative phases than other PDI index values. The PDI's corresponding to a smaller range will be those around 90° ($\pi/2$ radians), in order to allow a more accurate feedback of the relative phase when the algorithm described in **Error! Reference source not found.** converges around 90°. The PDI encoding would be as follows, where $\Delta b > \Delta s$.

Table 5. PDI index encoding

| PDI Index | Relative change (°) |
|---|---|
| m | 90°+ (m-1)$\Delta$b to 90°+m$\Delta$b |
| m-1 | 90°+ (m-2)$\Delta$b to 90°+(m-1)$\Delta$b |
| ... | ... |
| 1 | 90°+$\Delta$s to 90°+2$\Delta$s |
| 0 | 90°-$\Delta$s to 90°+$\Delta$s |
| -1 | 90°-$\Delta$s to 90°-2$\Delta$s |
| ... | ... |
| -(m-1) | 90°-(m-2)$\Delta$b to 90°-(m-1)$\Delta$b |
| -m | 90°-(m-1)$\Delta$b to 90°-m$\Delta$b |

In another embodiment of the present invention, the predefined levels and their corresponding PDI's are assigned taking into account the change of relative phases between different CSI reports, not the absolute values of the relative phases measured by the UE. In radio channel conditions when the coherence time is long, the relative phase change between measures will be low and reporting relative phase changes can require fewer bits for reporting, or relative phase change can be reported more accurately. In this embodiment of the invention, relative phase changes are coded as follows, where $\Delta$Phase is an arbitrarily set value of relative phase change.

Table 6. PDI index encoding

| PDI Index | Relative phase change (°) |
|---|---|
| m | (m-1)$\Delta$ to m$\Delta$ |
| ... | ... |
| 1 | $\Delta$ to 2$\Delta$ |
| 0 | -$\Delta$ to $\Delta$ |

(continued)

| PDI Index | Relative phase change (°) |
|---|---|
| -1 | -Δ to -2Δ |
| ... | ... |
| -m | -(m-1)Δ to -mΔ |

The result of this encoding is a PDI, which is reported from the UE to its serving eNB in the CSI reporting, indicating the phase difference of the radio resources reserved for transporting the ODL-SCH to that UE.

As explained before, the present invention distinctiveness includes the PDI as a new parameter to be reported in the Channel State Information (CSI). The CSI will then consist of the PDI, along the currently used parameters (CQI, PMI, PTI, RI), and its reporting will be controlled by the eNB.

The Channel State Information, in yet other embodiments, can include both the PDI and the CQI, along with eventually the other CSI parameters or, on another hand, the PDI but not the CQI, in order to reduce the traffic load in the uplink. The CSI reporting is always controlled by the eNB and different procedures can be implemented to require the UE to send the PDI instead of the CQI, and this invention does not restrict to any single procedure.

In a preferred embodiment of the present invention, PDI is sent by means of periodic CSI Reporting using PUCCH, where a UE is semi-statically configured by higher layers to periodically feedback different CSI (PDI, CQI, PMI, PTI, and/or RI) on the PUCCH using the reporting modes given in the next table. Periodic reporting is preferred because it will be necessary to periodically report the phase difference between the eNB signal and the interfering eNB signal, which will be constantly changing.

| | | PMI Feedback Type | |
|---|---|---|---|
| | | No PMI | Single PMI |
| PUCCH CQI Feedback Type | Wideband (wideband CQI) | Modified Mode 1-0 | Modified Mode 1-1 |
| | UE Selected (subband CQI) | Modified Mode 2-0 | Modified Mode 2-1 |

Table 7. Modified feedback Types for PUCCH CSI reporting Modes

In order to allow the transmission of the PDI, reporting modes 1-0, 1-1, 2-0 and 2-1 are modified in order to include the provision of the PDI parameter along with the CQI parameter. The definition of reporting modes can be found in 3GPP TS 36.213 V11.0.0.

As a preferred option, the PDI parameter is used in the serving eNB to generate a phase coordination message, which is sent from the serving eNB to the interfering eNB through the X2 interface.

To this end, the X2 Application Protocol (X2AP) defined in 3GPP TS 36.423 V11.0.0 (X2AP), must include a new Global Procedure called "phase coordination". The purpose of the phase coordination procedure is to transfer relative phase correction information of resource elements supporting ODL-SCH channels in the interfering eNB, between the serving eNB and the interfering eNB. The serving eNB initiates the phase coordination procedure by sending a phase coordination message to the interfering eNB.

The phase coordination message is sent by the serving eNB to the interfering eNB to transfer ODL-SCH relative phase correction information. In one embodiment of this invention, the phase coordination message has the following structure:

| IE/Group Name | Presence | IE type and reference | Semantics description |
|---|---|---|---|
| Message Type | | PHASE COORDINATION | |
| Cell Information | | | |
| >Cell Information Item | | | |

(continued)

| IE/Group Name | Presence | IE type and reference | Semantics description |
|---|---|---|---|
| >>Cell ID | Mandatory | As it is defined in 3GPP 36.423 section 9.2.14 | Id of the source cell |
| >>Relative Phase Correction IE | Mandatory | | Phase correction to apply |
| >>RB Use IE | Optional | | RB's to which phase correction must be applied |

The phase coordination message includes Cell ID of the serving eNB, the Relative Phase Correction **IE** and the RB Use IE.

The Relative Phase Correction **IE** indicates the phase correction to be applied to the RB's supporting ODL-SCH channels in the interfering eNB. The serving eNB calculates the Relative Phase Correction IE taking into account the PDI reported by the UE, and any other parameter that could be useful for improving the relative phase correction at the interfering eNB. In the simplest embodiment of this invention, the Relative Phase Correction **IE** will be the opposite of the PDI as it was reported by the UE.

| IE/Group Name | Presence | IE type and reference |
|---|---|---|
| Relative Phase Correction IE | Mandatory | $\alpha°$, or -PDI |

The RB Use **IE** provides information about which RB's the serving eNB is going to use.

In another embodiment of the present invention the RB Use **IE** provides information about which sub frames the serving eNB is configuring as subframes to be used for ODL-SCH. These subframes will be preferred by the serving eNB for scheduling RB's for ODL-SCH transport. RB Use IE is optional, because if not sent the interfering eNB can assume that the serving eNB will use the RB's reported in previous phase coordination messages.

| IE/Group Name | Presence | IE type and reference | Semantics description |
|---|---|---|---|
| RB Use IE | Optional | BIT STRING (SIZE(10)) | Each position in the bitmap represents a DL subframe, for which value "1" indicates 'Used' and value "0" indicates 'non Used'. The first position corresponds to subframe 0 in a radio frame. The maximum number of subframes is 10. |

In another embodiment of the present invention the RB Use **IE** provides information about which RB's in a subframe the serving eNB is configuring as used RB's for ODL-SCH transport. To this end, the RB use **IE** can include the following information:

-    The DL subframe, numbered from 0 to 9.

-    The physical resource block number $n_{PRB}$ in the frequency domain:

$$n_{PRB} = \left\lfloor \frac{k}{N_{sc}^{RB}} \right\rfloor$$

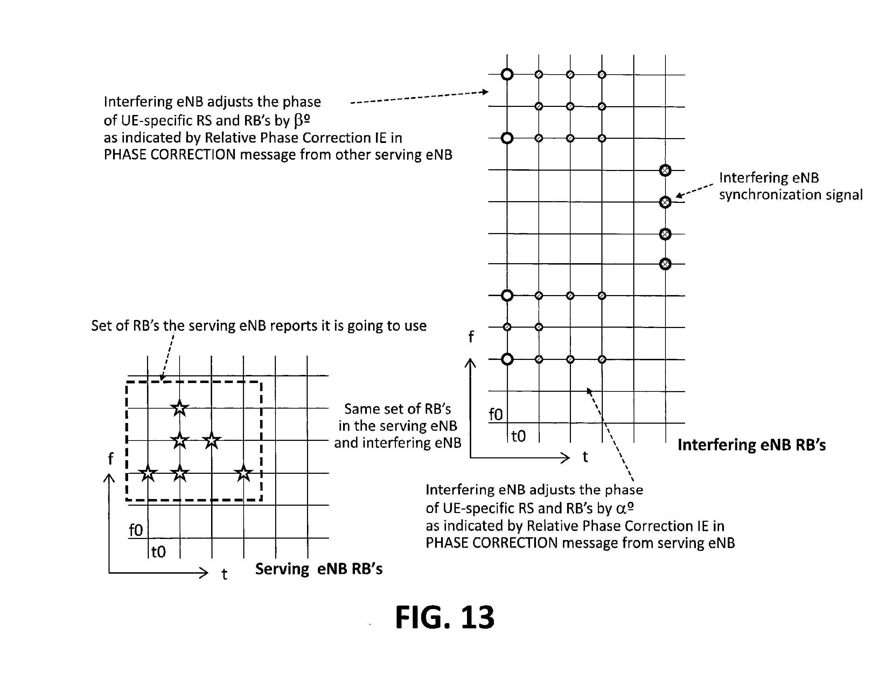

In yet another embodiment of the present invention, the interfering eNB makes use of the Relative Phase Correction **IE** and the RB Use **IE** of the phase coordination messages it receives from the serving eNB's to correct the phase of its transmitted RB's that make use of the same time and frequency radio resources than the serving eNB, as it is illustrated in the Fig.13.

The RB's used by the interfering eNB to transport its ODL-SCH channels, once their phase correction has been done based on the information of the Relative Phase Correction IE's in the phase coordination messages, will be orthogonal in phase at the UE with respect to the RB's used by the serving eNB to transport its ODL-SCH channels.

In a last embodiment of the present invention, the interfering eNB reports to its UE's, by means of the PDCCH, which RB's in the PDSCH or in the NCT are used to map an ODL-SCH scheduled to every UE, and which is the phase of the modulated symbols with respect to the phase reference of the LTE signal. The phase difference is measured with respect to the phase indicated by the Primary and Secondary Synchronization signals. The phase difference affects all the resource elements scheduled to the UE, including the UE-specific reference signals.

For this purpose, the DCI formats transported by the PDCCH, formats 0, 1, 1A, 1 B, 1C, 1 D, 2, 2A, 2B, 2C, will include a new indicator, called "Phase Indicator", which indicates if the scheduled resource elements for transporting the ODL-SCH are modulated with a phase difference with respect to the Primary and Secondary Synchronization signals. This invention does not preclude any realization of this Phase Indicator, for example it could be an integer from 0 to 360, indicating the phase in degrees.

The UE served by the interfering eNB receives de PDCCH and the DCI information that it transports, and makes use of the Phase Indicator in the DCI to determine if there are ODL-SCH resources scheduled to it in the PDSCH and their phase with respect to the LTE signal phase reference, in order to perform the correct demodulation of them.

The RB's that are used for transporting the ODL-SCH, both in the serving eNB and in the interfering eNB, are modulated with real valued symbols. The procedure for generating the real valued symbols is not part of this invention. For example, it is possible to generate sequences of real valued numbers by means of the rotation of a complex valued constellation and a projection of the resulting rotated complex values into the I and Q axis, as it is described in 3GPP TSG RAN WG1 #31, Document R1-030156. In this way an M-QAM constellation is transformed into two real valued projections, with M values per projection. This invention does not preclude any procedure, and the only requisite is that the RB's that transport the ODL-SCH are modulated with real valued symbols.

The scope of the invention is defined by the following claims.

## Claims

1. A method for reducing interference in a wireless network, wherein at least one user device or UE wirelessly connected to at least one serving base station suffers interference from at least one interfering base station, **characterized in that** the method comprises the following steps:

   - comparing, said at least one UE, radio resources that receives from said at least one serving base station with the same radio resources that receives from said at least one interfering base station in order to calculate the phase difference between the radio resources;
   - providing, said at least one UE, to said at least one serving base station said calculated phase difference by means of a phase difference indication parameter;
   - calculating said at least one serving base station phase coordination messages and sending them to said at least one interfering base station; and
   - generating, said at least one interfering base station, using said phase coordination messages, radio resources that are orthogonal in phase at said at least one UE with the same radio resources received from the at least one serving base station.

2. A method according to claim 1, wherein the radio resources generated by said serving base station and said interfering base station are modulated by real numbers and in a single axis of a constellation diagram.

3. A method according to claim 2, wherein said at least one serving base station and said at least one interfering base station comprises previous to said comparing step, sending to said UE, by means of a Physical Downlink Control Channel (PDCCH), the phase of the said generated radio resources, wherein said PDCCH indicates the relative phase of the generated radio resources with respect to the phase of the base station other radio resources, by means of a Phase Indicator.

4. A method according to claim 1, wherein said providing and said calculating steps are periodically executed, being the periodicity of the same order of magnitude than the coherence time of the radio channel.

5. A method according to claim 1, wherein said calculated phase difference indication parameter is represented by an integer indicating at least the absolute value of said phase difference or the phase change.

6. A method according to claim 1, comprising performing said calculation and sending of said phase coordination messages through an X2 interface.

7. A method according to claim 1 or 6, comprising using said phase coordination messages in order to indicate if the phase of the interfering base station radio resources has to be increased or decreased, comprising: increasing the phase of the interfering base station radio resources if said phase coordination message indicates a given amount of phase increase, or decreasing the phase of the interfering base station radio resources if said phase coordination message indicates a given amount of phase decrease.

8. A method according to previous claims, wherein said at least one serving base station and said at least one interfering base station are time synchronized.

9. A method according to previous claims, wherein the at least one serving base station is a microcell and the at least one interfering base station is a macrocell.

10. A method according to previous claims, wherein said UE is located in the border between the serving base station or microcell and the interfering base station or macrocell coverage areas.

11. A method according to claim 1, wherein said wireless network comprises one of a LTE network or a LTE-Advanced network.

12. A system for reducing interference in a wireless network, comprising:

- at least one user device or UE;
- at least one serving base station; and
- at least one interfering base station;

wherein said UE is wirelessly connected to said at least one serving base station and suffers interference from said at least one interfering base station, **characterized in that**:

- said at least one UE comprises means for comparing radio resources that receives from said at least one serving base station with the same radio resources that receives from said at least one interfering base station in order to calculate the phase difference between them and means for providing to said at least one serving base station said calculated phase difference by means of a phase difference indication parameter;
- said at least one serving base station comprises means for calculating and sending a phase coordination message to said at least one interfering base station; and
- said at least one interfering base station comprises means for generating by using said phase coordination message, radio resources that are orthogonal in phase at said at least one UE with the same radio resources received from the at least one serving base station.

13. A computer program product, on a non-transitory computer-readable medium executable by a microprocessor for reducing interference in a wireless network, said computer program product comprising program code instructions configured for calculating the phase difference by means of a phase difference indication parameter between the assigned radio resources of at least one user device, received from at least one serving base station, and the same time and frequency radio resources used by at least one interfering base station.

**FIG. 1**

eNB

Coordination area

eNB

High power remote radio head

Coordination area

Optical Fibre

**FIG. 2**

**FIG. 3**

Legend:
- eNB
- Low power remote radio head
- Coordination area
- Optical Fibre

FIG. 4

FIG. 5

OFDM/QAM symbol

△ complex

OFDM/OQAM symbol

○ real part

✷ imaginary part

codewords

layers

antenna ports

| Scrambling | → | Modulation mapper | → | | → | | → | | → | Resource element mapper | → | OFDM signal generation | → |
| Scrambling | → | Modulation mapper | → | Layer mapper | → | Precoding | → | Resource element mapper | → | OFDM signal generation | → |

**FIG. 6**

Macro cell (interfering eNB)

Micro cell (serving eNB)

Micro cell coverage area

UE

Micro cell coverage area

UE in the border between the macro cell and the micro cell coverage areas

**FIG. 7**

EP 2 809 123 A1

Subcarriers modulated with a real number sequence in the I axis

I axis

serving eNB RB's

f

t

Ts

Serving eNB signal + interference. The received symbol remains in the correct decision area (orthogonal interference)

Decision thresholds

I axis

Q axis

Subcarriers modulated with a real number sequence in the Q axis

Interfering eNB RB's

f

t

Ts

## FIG. 8

EP 2 809 123 A1

interfering eNB

RB's supporting ODL-SCH
of interfering eNB

Step 3

RB's supporting ODL-SCH
of serving eNB

serving eNB

UE

Step 1        Step 2

PHASE COORDINATION
messages through X2

other serving eNB

FIG. 9

EP 2 809 123 A1

EP 2 809 123 A1

UE reports to serving eNB the calculated phase difference by means of Phase Difference Indicator (PDI)

PDI with respect to π/2

PDI > π/2

PDI < π/2

Serving eNB generates "decrease" PHASE COORDINATION messages to the interfering eNB

Serving eNB generates "increase" PHASE COORDINATION messages to the interfering eNB

Interfering eNB uses PHASE COORDINATION messages to correct the phase of RB's supporting ODL-SCH that overlap in time and frequency with the ones used by serving eNB

UE served by serving eNB receives RB's from interfering eNB and RB's from its serving eNB

# FIG. 10

EP 2 809 123 A1

Same set of RB's
in the serving eNB
and interfering eNB

**Other erving eNB RB's**

Set of RB's the serving eNB reports it is going to use
RB's the serving eNB actually uses

Same set of RB's
in the serving eNB
and interfering eNB

**Serving eNB RB's**

Interfering eNB adjusts the phase of RB's
to be orthogonal with the serving eNB ones
when detected by the UE

**Interfering eNB RB's**

# FIG. 11

serving eNB modulates with real valued symbols the RB's that support ODL-SCH

serving eNB reports to UE the RB's that support ODL-SCH by means of PDCCH

PDCCH indicates the UE the relative phase of the RB's by means of the Phase Indicator

UE demodulates RB's supporting ODL-SCH from its serving eNB

UE calculates phase difference with respect to the same RB's received from interfering eNB

UE reports to serving eNB the calculated phase difference by means of Phase Difference Indicator (PDI)

Serving eNB uses PDI to generate PHASE COORDINATION messages to the interfering eNB

Interfering eNB modulates with real valued symbols the RB's that support ODL-SCH

Interfering eNB uses PHASE COORDINATION messages to correct the phase of RB's supporting ODL-SCH that overlap in time and frequency with the ones used by serving eNB

UE served by serving eNB receives RB's from interfering eNB that are in quadrature with the RB's from its serving eNB

**FIG. 12**

Interfering eNB adjusts the phase
of UE-specific RS and RB's by $\beta^\circ$
as indicated by Relative Phase Correction IE in
PHASE CORRECTION message from other serving eNB

Interfering eNB
synchronization signal

Set of RB's the serving eNB reports it is going to use

Same set of RB's
in the serving eNB
and interfering eNB

f

f0

t0

t

Interfering eNB RB's

Interfering eNB adjusts the phase
of UE-specific RS and RB's by $\alpha^\circ$
as indicated by Relative Phase Correction IE in
PHASE CORRECTION message from serving eNB

f

f0

t0

t          Serving eNB RB's

**FIG. 13**

Europäisches
Patentamt

European
Patent Office

Office européen
des brevets

**EUROPEAN SEARCH REPORT**

Application Number

EP 13 38 2201

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 0 865 172 A2 (NOKIA MOBILE PHONES LTD [FI] NOKIA CORP [FI]) 16 September 1998 (1998-09-16) * page 2, lines 14-17 * * page 3, lines 55-57 * * page 14, lines 7-36 * ----- | 1-13 | INV. H04W72/08 ADD. H04B7/06 |
| Y | WO 2011/088465 A1 (QUALCOMM INC [US]; DAMNJANOVIC ALEKSANDAR [US]; WEI YONGBIN [US]; VAJA) 21 July 2011 (2011-07-21) * paragraphs [0002], [0087], [0088], [00148], [00155], [00157] * ----- | 1-13 | |
| A | US 2012/208467 A1 (WANG SHERWIN J [US] ET AL) 16 August 2012 (2012-08-16) * paragraphs [0018] - [0020] * ----- | 1-13 | |

TECHNICAL FIELDS
SEARCHED (IPC)

H04W
H04B

The present search report has been drawn up for all claims

| Place of search | Date of completion of the search | Examiner |
|---|---|---|
| Munich | 25 October 2013 | Cantagallo, Marco |

EPO FORM 1503 03.82 (P04C01)

## ANNEX TO THE EUROPEAN SEARCH REPORT
## ON EUROPEAN PATENT APPLICATION NO.

EP 13 38 2201

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2013

| Patent document cited in search report | | Publication date | Patent family member(s) | | Publication date |
|---|---|---|---|---|---|
| EP 0865172 | A2 | 16-09-1998 | DE 69807550 | D1 | 10-10-2002 |
| | | | DE 69807550 | T2 | 30-04-2003 |
| | | | EP 0865172 | A2 | 16-09-1998 |
| | | | US 6101176 | A | 08-08-2000 |
| WO 2011088465 | A1 | 21-07-2011 | CN 102783233 | A | 14-11-2012 |
| | | | EP 2526733 | A1 | 28-11-2012 |
| | | | EP 2611250 | A1 | 03-07-2013 |
| | | | JP 2013517741 | A | 16-05-2013 |
| | | | TW 201141289 | A | 16-11-2011 |
| | | | US 2012021753 | A1 | 26-01-2012 |
| | | | US 2013223373 | A1 | 29-08-2013 |
| | | | US 2013244678 | A1 | 19-09-2013 |
| | | | WO 2011088465 | A1 | 21-07-2011 |
| US 2012208467 | A1 | 16-08-2012 | NONE | | |